# EUROPÄISCHE PATENTANMELDUNG

(11) **EP 3 739 332 A1**
(43) Veröffentlichungstag der Anmeldung: **18.11.2020**
(21) Anmeldenummer: 20173831.7
(22) Anmeldetag: 11.05.2020
(51) Int. Cl.: G01N 29/07, G01N 29/11, G01N 29/04

(54) **VERFAHREN ZUR ZERSTÖRUNGSFREIEN ULTRASCHALLPRÜFUNG AN ÜBER DEN UMFANG VON BAUTEILEN UMLAUFENDEN WANDUNGEN**

(30) Priorität: 14.05.2019 DE 102019206993
(71) Anmelder: FRAUNHOFER-GESELLSCHAFT zur Förderung der angewandten Forschung e.V., 80686 München (DE)
(72) Erfinder: WEIHNACHT, Bianca, 01109 Dresden (DE); GAUL, Tobias, 01109 Dresden (DE); LIESKE, Uwe, 01109 Dresden (DE); SCHUBERT, Lars, 01109 Dresden (DE)
(74) Vertreter: Pfenning, Meinig & Partner mbB

(57) **Zusammenfassung**

Bei dem Verfahren zur zerstörungsfreien Prüfung an über den Umfang von Bauteilen umlaufenden Wandungen werden mit mindestens einem Ultraschallwandler (1), der an einer Oberfläche der Wandlung fixiert ist, horizontal polarisierte Transversalwellen (3) in lateraler Ausbreitungsrichtung und Kompressionswellen oder vertikal polarisierte Transversalwellen (6) in radialer Ausbreitungsrichtung emittiert. Mit dem mindestens einen Ultraschall-Wandler (1) und/oder mindestens einem weiteren Ultraschall-Wandler, der in einem bekannten Abstand zum mindestens einen Ultraschall-Wandler (1) an der jeweiligen Wandung des Bauteils (2) angeordnet ist, werden an Defekten reflektierte horizontal polarisierte Transversalwellen (4) und Kompressionswellen oder vertikal polarisierte Transversalwellen (7) nach oder bei einem Umlauf um den Umfang der Wandung zur Bestimmung der jeweiligen Wanddicke detektiert.

## Beschreibung

Die Erfindung betrifft ein Verfahren zur zerstörungsfreien Prüfung an über den Umfang von Bauteilen umlaufenden Wandungen. Sie kann insbesondere für die Prüfung von Rohren, innen hohlen Behältnissen, Rotorblättern, Flugzeugflügeln u.a. Bauteilen mit vorzugsweise einer geschlossene Geometrie eingesetzt werden. Die Wandung der Bauteile kann aus verschiedenen Werkstoffen und Materialien, insbesondere aus Stahl bestehen.

Infrastruktur muss, sofern sie kritisch ist, regelmäßig auf Schäden geprüft werden. Dies ist in Regelwerken festgelegt. Für die hier betrachteten Anwendungsfälle sind dies Risse, Korrosionsphänomene, Wandabtrag, Pitting, Löcher und Delaminationen. Diese müssen ab einer relevanten Größe zuverlässig detektiert werden können, um die Sicherheit der Infrastruktur zu gewährleisten.

Es gibt in der Praxis vielfältige Möglichkeiten sowohl für eine zerstörungsfreie Prüfung (ZfP-Prüfung) als auch ein dauerhaftes Monitoring (Sensoren und Aktoren verbleiben am Bauteil). Als Verfahren haben sich z.B. Ultraschallprüfung, Thermographie, Wirbelstromverfahren, Röntgen, visuelle Prüfung, Schallemission u.a.m. etabliert. Für die Erfindung sind die Ultraschallverfahren relevant.

Für Rohrleitungs- und Behälterprüfungen gibt es ebenfalls konkrete Anforderungen an die Prüfung. In der Regel variieren diese von Branche zu Branche und werden im Rahmen von Revisionen durchgeführt. Für die ZfP-Messungen stehen eine Reihe von Scherwellenprüfsystemen zur Verfügung, die aber derzeit nicht für ein Monitoring (Messsystem verbleibt am Bauteil) angewendet werden können. Es handelt sich um Sensormanschetten mit Scherwellenwandlern.

Diese bekannten Manschetten werden aber nicht gleichzeitig für eine Wanddickenmessung/Wandabtragsmessung verwendet.

Es ist daher Aufgabe der Erfindung, Möglichkeiten für eine erweiterte zerstörungsfreie Prüfung an Wandungen von Bauteilen durchzuführen, mit denen mehrere unterschiedliche Parameter mit einem gemeinsamen Messaufbau überprüft werden können.

Erfindungsgemäß wird diese Aufgabe mit einem Verfahren, das die Merkmale des Anspruchs 1 aufweist, gelöst. Vorteilhafte Weiterbildungen und Ausführungsformen der Erfindung können mit in untergeordneten Ansprüchen bezeichneten Merkmalen realisiert werden.

Bei dem erfindungsgemäßen Verfahren zur zerstörungsfreien Prüfung an über den Umfang von Bauteilen umlaufenden Wandungen werden mit mindestens einem Ultraschallwandler, der an einer Oberfläche der Wandung fixiert ist, in Bezug zur Oberfläche eines jeweiligen Bauteils horizontal polarisierte Transversalwellen in lateraler Ausbreitungsrichtung und Kompressionswellen oder in Bezug zur Oberfläche eines jeweiligen Bauteils vertikal polarisierte Transversalwellen senkrecht dazu emittiert.

Die horizontal polarisierten Transversalwellen, die man auch als Scherwellen bezeichnen kann, werden dabei im Wesentlichen parallel zur mittleren Längsachse emittiert und an den Oberflächen der jeweiligen Wandung geführt. Die Kompressionswellen oder vertikal polarisierten Transversalwellen werden im Gegensatz dazu im Wesentlichen senkrecht zur mittleren Längsachse der jeweiligen Wandung emittiert.

Mit dem mindestens einen Ultraschall-Wandler oder mindestens einem weiteren Ultraschall-Wandler, der in einem bekannten Abstand zum mindestens einen Ultraschall-Wandler an der jeweiligen Wandung des Bauteils angeordnet ist, werden an Defekten reflektierte horizontal polarisierte Transversalwellen und Kompressionswellen oder vertikal polarisierte Transversalwellen nach oder bei einem Umlauf um den Umfang der Wandung zur Bestimmung der jeweiligen Wanddicke detektiert. Dabei können die horizontal polarisierten Transversalwellen in eine Richtung parallel zur Oberfläche emittiert und nach einer Reflexion detektiert werden. Vertikal polarisierte Transversalwellen laufen über den Umfang bis zum mindestens einen Ultraschall-Wandler oder einem weiteren Ultraschall-Wandler üblicherweise in gleicher Ausrichtung des einen Ultraschall-Wandler.

Dabei sollten die Amplitude und/oder die Laufzeit von an Defekten reflektierten horizontal polarisierten Transversalwellen und die Amplitude und/oder die Laufzeit von Kompressionswellen oder vertikal polarisierte Transversalwellen nach oder bei einem Umlauf um den Umfang der Wandung zur Bestimmung der jeweiligen Wanddicke detektiert werden.

Werden die Ultraschallwellen von dem mindestens einen Ultraschall-Wandler emittiert und auch detektiert, sollten die Emission und die Detektion alternierend erfolgen, so dass eine Detektion zu Zeiten erfolgt, in denen keine Emission erfolgt.

Werden Ultraschallwellen mit dem mindestens einem Ultraschallwandler lediglich emittiert und mit mindestens einem weiteren in einem bekannten Abstand angeordneten Ultraschallwandler ausschließlich detektiert, können Emission und Detektion gleichzeitig durchgeführt werden.

Weitere Ultraschall-Wandler können an der jeweiligen Wandung so positioniert werden, dass sie entweder horizontal polarisierte Transversalwellen in lateraler Ausbreitungsrichtung oder Kompressions- oder vertikal polarisierte Transversalwellen in tangentialer Ausbreitungsrichtung detektieren.

Bevorzugt sollten horizontal polarisierte Transversalwellen in lateraler Ausbreitungsrichtung und Kompressionswellen oder vertikal polarisierte Transversalwellen in tangentialer Ausbreitungsrichtung mit einer Frequenz im Bereich 10 kHz bis 1 MHz emittiert werden.

Mit horizontal polarisierten Transversallwellen können bevorzugt Defekte/Schäden und mit Kompressions- oder vertikal polarisierten tangential umlaufenden Transversalwellen kann bevorzugt die Wandstärke der jeweiligen Wandung des Bauteils bestimmt werden.

Es kann mindestens ein Ultraschall-Wandler, der in einem elastisch verformbaren Material eingebettet oder einlaminiert ist, eingesetzt werden. Dies kann auch auf mindestens einen weiteren Ultraschall-Wandler angewendet werden. Dabei kann/können der mindestens eine Ultraschallwandler und ggf. auch mindestens ein weiterer Ultraschall-Wandler mittels einer über den Umfang der jeweiligen Wandung verlaufenden Manschette, bevorzugt lösbar befestigt werden. Ein elastisch verformbares Material kann beispielsweise ein Polymer sein.

Es können die verschiedensten an sich bekannten Ultraschall-Wandler prinzipiell eingesetzt werden. Bevorzugt sollten jedoch Ultraschall-Wandler mit einem rechteckigen keramischen plattenförmigen Element aus piezoelektrischer Keramik, das an zwei gegenüberliegenden Oberflächen mit Elektroden versehen ist, eingesetzt werden. Solche Ultraschallwandler, die für die Emission von Ultraschallwellen eingesetzt werden, sollten an der Wandung so fixiert sein, dass die horizontal polarisierten Transversalwellen in lateraler / axialer Richtung ausbreitungsfähig sind.

Die hier einsetzbaren Ultraschall-Wandler können also sowohl als Aktor als auch als Sensor eingesetzt werden. Durch die Änderung des Seitenverhältnisses und/oder der Wahl der Frequenz der emittierten Ultraschallwellen können die beiden generierten Wellenanteile eingestellt werden, so dass die Überwachungsaufgabe bzw. die ZfP-Prüfung optimal durchgeführt werden kann. Es handelt sich dabei um zwei Wellenarten, die auch mit nur einem Ultraschall-Wandler generiert und wieder detektiert werden.

Mindestens ein Ultraschall-Wandler kann in lateraler Richtung horizontal polarisierte Transversalwellen (Scherwellen) emittieren, die sich innerhalb der jeweiligen Bauteilwandung ausbreiten und an Defekten/Schäden, wie insbesondere Rissen oder Löchern reflektiert und zurück zum mindestens einen Ultraschall-Wandler reflektiert werden. Somit ist eine Detektion dieser Defekte/Schäden möglich. Die Einflusszone hängt dabei vom jeweiligen Ultraschall-Wandler und dessen Öffnungswinkel ab.

Gleichzeitig werden senkrecht dazu in tangentialer Ausbreitungsrichtung Kompressions- und/oder vertikal polarisierte Transversalwellen emittiert, die sich beidseitig über den Umfang der jeweiligen Wandung des Bauteils ausbreiten. Diese laufen ebenfalls zurück zu mindestens einen Ultraschall-Wandler und werden dort detektiert. Durch die Art der Wellen, deren Ausbreitungsgeschwindigkeit von der Frequenz und der Wanddicke abhängt (geführte Wellen), enthalten die detektierten Signale integrale Informationen zu Wandabtrag, Korrosion und Wanddicke am Umfang der Position an der der mindestens eine Ultraschall-Wandler an der jeweiligen Bauteilwandung fixiert ist. Die Einflusszone hängt dabei vom Wandler, der für die Emission genutzten Frequenz der Ultraschallwellen und des Öffnungswinkels des mindestens einen Ultraschall-Wandlers ab und beschreibt den Bauteilabschnitt, in dem die Wanddicke Einfluss auf das Messergebnis hat und somit vermessen werden kann.

So kann man über die detektierten Amplituden auf die Größe eines Defektes/Schadens und aus der Laufzeit, die vom Beginn der Emission bis zum Beginn einer Detektion verstrichen ist, auf den Ort eines ggf. vorhandenen Defekts/Schadens schließen.

Das Verhältnis der Energie der abgestrahlten Wellenmoden in senkrechter- bzw. in horizontaler Richtung kann über die Abmessung des mindestens einen Ultraschall-Wandlers, der ein piezoelektrisches Wandlerelement sein kann, die Frequenz, mit der Ultraschallwellen emittiert werden, eingestellt bzw. an die Struktur angepasst werden. Ausschlaggebend dafür ist die Wellenlänge der emittierten Ultraschallwellen bei der gewählten Anregungsfrequenz (Mode-Tuning) und der zugrundeliegenden Wanddicke des jeweiligen Bauteils. Ist ein geradzahliges Vielfaches der halben Wellenlänge eines Wellenmodes identisch mit der Abmessung des eingesetzten mindestens einen Ultraschall-Wandlers in Ausbreitungsrichtung der emittierten Ultraschallwellen, ist die Energie minimal. Ist ein ungeradzahliges Vielfaches der halben Wellenlänge eines Wellenmodes identisch mit der Abmessung des mindestens einen Ultraschall-Wandlers in Ausbreitungsrichtung ist die Energie maximal.

Das Amplitudenverhältnis lässt sich daher über die Abmessung des mindestens einen Ultraschall-Wandlers für eine bestimmte Frequenz und Wanddicke des jeweiligen Bauteils oder über die Variation der Frequenz der emittierten Ultraschallwellen bei einem bestimmten Aspektverhältnis des mindestens einen Ultraschall-Wandlers einstellen.

Mit der Erfindung können zwei Messaufgaben auch gleichzeitig erfüllt werden. Dies geht mit deutlich verringertem finanziellen Aufwand einher (reduzierte Anzahl an Kabeln und Messkanälen). Weiterhin können die eingesetzten Ultraschall-Wandler für jede Prüfaufgabe durch die Auswahl eines geeigneten Abstrahlverhältnisses zwischen den beiden Ultraschall-Wandlern an das jeweilige Bauteil optimiert und/oder die genutzten Wellenarten individuell angepasst werden. Bei längeren Laufwegen für die horizontal polarisierten Transversalwellen und kleineren Bauteildurchmessern kann beispielsweise die verfügbare Energie zugunsten der horizontal polarisierten Transversalwellen aufgeteilt werden, so dass dort größere Leistungen und Amplituden genutzt werden können, als dies bei den vertikal polarisierten Transversalwellen der Fall ist.

Nachfolgend soll die Erfindung beispielhaft näher erläutert werden.

Dabei zeigen:
Figur 1 in schematischer Form einen für die Durchführung des erfindungsgemäßen Verfahrens geeigneten Messaufbau mit einer Erklärung der Funktionalität;
Figur 2 ein Diagramm, das die Abhängigkeiten der Ausbreitungsgeschwindigkeit von der Frequenz, der emittierten Ultraschall-Wellen und der Wanddicke der jeweiligen Bauteilwandung verdeutlicht;
Figur 3 ein Diagramm des zeitlichen Verlaufs der Amplitude von mit mindestens einem Ultraschall-Wandler emittierten Ultraschallwellen bei einer Frequenz von 100 kHz;
Figur 4 ein Diagramm der Ausbreitungsgeschwindigkeit emittierter Ultraschallwellen über der Frequenz, wobei die tatsächliche Ausbreitungsgeschwindigkeit (Messwerte) der theoretischen Ausbreitungsgeschwindigkeit (Dispersionskurve) für ein Stahlrohr mit einem Außendurchmesser von 219,3 mm und einer Wanddicke von 8 mm gegenübergestellt ist.
Figur 5 ein Diagramm das das Verhältnis von detektierten Amplituden des T(0,1) Mode in Bezug zum L(0,2) Mode über der Frequenz der Ultraschallwellen an einem Stahlrohr als Bauteil.

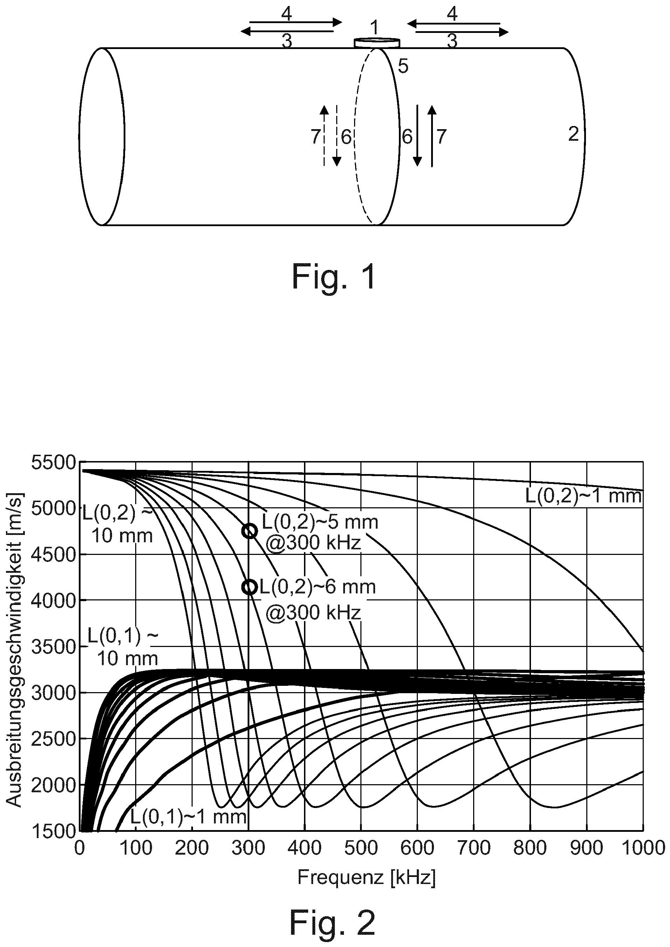

In Figur 1 ist ein Messaufbau, der zur Durchführung des Verfahrens eingesetzt werden kann, mit dem Messprinzip gezeigt.

Dabei ist an einer äußeren Mantelfläche eines Rohres als Bauteil 2 ein Ultraschall-Wandler 1 fixiert. Der Ultraschall-Wandler 1 ist in an eine elektrische Spannungsquelle (nicht gezeigt) angeschlossen und wird mit einer elektrischen Wechselspannung mit vorgegebener Frequenz betrieben, so dass von ihm Ultraschallwellen emittiert werden. Außerdem ist er bei dieser Ausführung an eine elektronische Auswerteeinheit (nicht gezeigt) angeschlossen, die ausgebildet ist mit dem Ultraschall-Wandler 1 detektierte Ultraschallwellen 3, 4, 6 und 7 auszuwerten, was insbesondere deren Amplitude und/oder Laufzweit betrifft.

Bei der Emission von Ultraschallwellen werden einmal lateral ausgesendete horizontal polarisierte Transversallwellen 3 emittiert und breiten sich in der Wandung des Rohres 2 aus, was mit Pfeilen angedeutet ist. Sie können zur zerstörungsfreien Prüfung von Defekten, wie z.B. Rissen genutzt werden. Dazu können mit dem Ultraschall-Wandler 1 in Zeiten, bei denen keine Emission von Ultraschallwellen erfolgt, von einem Defekt reflektierte Wellen 4 mit Schadensinformation detektiert werden. Aus der Laufzeit und Amplitude der detektierten Ultraschallwellen kann auf die Art und die Position eines Defektes geschlossen werden. Dies kann mittels der elektronischen Auswerteeinheit erfolgen.

Wie Figur 1 zu entnehmen ist, können horizontal polarisierte Transversalwellen 3 in zwei entgegengesetzte Richtungen emittiert und von dort rückreflektierte Ultraschallwellen 4 detektiert werden.

Die Einflusszone hängt dabei vom jeweiligen Ultraschall-Wandler 1 und dessen Öffnungswinkel ab.

Mit dem Ultraschall-Wandler 1 können gleichzeitig auch vertikal polarisierte Transversalwellen 6 und 7 emittiert werden, die entlang des Umfangs des Bauteiles 2 umlaufen und wieder zum Ultraschall-Wandler 1 gelangen. Im Zusammenwirken mit der elektronischen Auswerteeinheit kann insbesondere die Wanddicke des Bauteiles 2 bestimmt werden, so dass in dieser Richtung für eine Zustandsbestimmung des jeweiligen Bauteils 2 geeignete Messwerte erhalten werden können.

Durch die Art der Ultraschallwellen, deren Ausbreitung signifikant von der Wahl der Frequenz und der Wanddicke abhängt (geführte Wellen), enthalten die detektierten Signale integrale Informationen zu Wandabtrag, Korrosion und Wanddicke am Umfang der Wandlerposition. Die Einflusszone hängt dabei vom jeweiligen Ultraschall-Wandler 1, der anregenden Frequenz und dessen Öffnungswinkel ab und beschreibt den Bauteilabschnitt, in dem die Wanddicke Einfluss auf das Messergebnis hat und somit vermessen werden kann.

Für die Ermittlung von Fehlern in axialer Richtung der Bauteilwandung können von Defekten, Fehlern oder Änderungen des Empfangssignals dort reflektierter horizontal polarisierter Transversalwellen 4 ausgewertet werden. In Bauteilumfangsrichtung kann die Laufzeit der Kompressions- oder vertikal polarisierten Transversallwellen ausgewertet und anhand der über die Laufzeit ermittelten Ausbreitungsgeschwindigkeit des L(0,2)- Wellenmodes die Wanddicke anhand der Dispersionskurven bestimmt werden. Dies kann man Figur 2 für verschiedene Wandstärken entnehmen.

Die Änderung der Ausbreitungsgeschwindigkeit ist in Figur 2 dargestellt. Kleine Fehler in Umfangsrichtung können darüber hinaus ebenfalls durch Änderungen im Empfangssignal ermittelt werden.

So beträgt beispielsweise die Ausbreitungsgeschwindigkeit des L(0,2) Modes bei 300 kHz und bei einer Wandstärke von 6mm ca. 4200m/s, für die Wandstärke von 5mm ca. 4750m/s.

Experimentelle Untersuchung wurden mit einem Ultraschall-Wandler 1 mit Abmessungen 25 mm x 16 mm, der auf der äußeren Mantelfläche eines Rohres mit einem Außendurchmesser von 219,3 mm und einer Wanddicke von 8 mm durchgeführt. Die Emission von Ultraschallwellen erfolgte zwischen 75 kHz und 190 kHz in 5 kHz Schritten, so dass eine Frequenzabhängigkeit erkennbar wird.

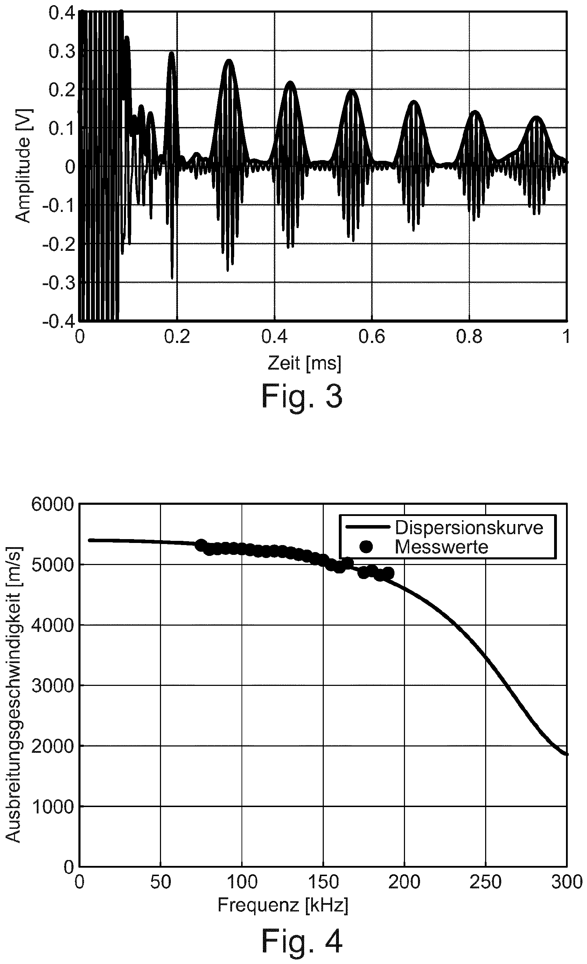

Die sich in Rohrumfangsrichtung ausbreitende Ultraschallwellen 6 und 7 kann als periodisches Echo am Ultraschall-Wandler 1 registriert werden, was aus Figur 3 zu entnehmen ist, die beispielhaft ein Zeitsignal am Ultraschall-Wandler 1 bei Anregungsfrequenz von 100 kHz zeigt.

Aus den Zeitdifferenzen der umlaufenden vertikal polarisierten Transversallwellen 6 und 7 lässt sich die Ausbreitungsgeschwindigkeit des Wellenmodes L(0,2) ermitteln und mit theoretisch ermittelbaren Dispersionskurven gegenüberstellen und somit die Wanddicke des jeweiligen Bauteils 2 ermitteln.

Figur 4 verdeutlicht eine Überlagerung der gemessenen Ausbreitungsgeschwindigkeit bei unterschiedlichen Frequenzen mit dem theoretischen Dispersionsdiagramm für ein Stahlrohr Außendurchmesser 219,3 mm x 8 mm Wanddicke.

Das Verhältnis der Energie der abgestrahlten Wellenmoden in Quer- bzw. Längsrichtung kann über die Abmessung des Ultraschall-Wandlers 1, der ein piezoelektrisches Wandlerelement sein kann, bzw. die Sendefrequenz eingestellt bzw. an die Struktur angepasst werden. Ausschlaggebend dafür ist die Wellenlänge der emittierten Ultraschallwellen bei der gewählten Anregungsfrequenz (Mode-Tuning) und der zugrundeliegenden Wanddicke des jeweiligen Bauteils 1. Ist ein Vielfaches der Wellenlänge eines Wellenmodes identisch mit der Abmessung des eingesetzten Ultraschall-Wandlers 1 in Ausbreitungsrichtung der emittierten Ultraschallwellen, ist die Energie minimal. Ist ein Vielfaches der halben Wellenlänge eines Wellenmodes identisch mit der Abmessung des Ultraschall-Wandlers 1 in Ausbreitungsrichtung ist die Energie maximal.

Das Amplitudenverhältnis lässt sich daher über die Abmessung des Ultraschall-Wandlers 1 für eine bestimmte Frequenz und Wanddicke oder über die Variation der Frequenz der emittierten Ultraschallwellen bei einem bestimmten Aspektverhältnis des Ultraschall-Wandlers 1 einstellen.

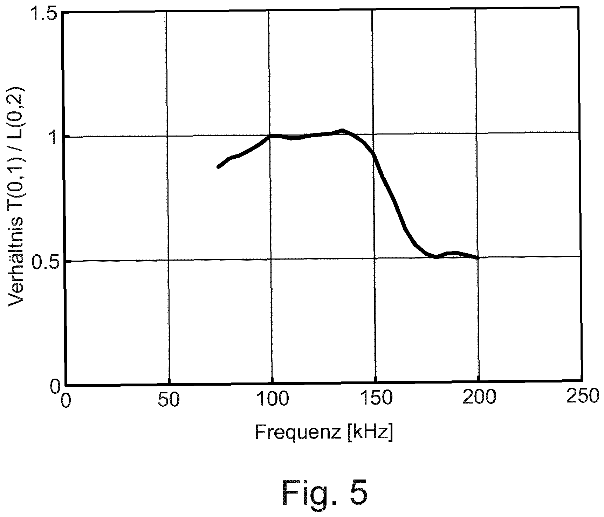

Figur 5 verdeutlicht das Amplitudenverhältnis von T(0,1) Mode zu L(0,2) Mode an einem Rohr 2.

Dies ist beispielhaft für verschiedene Frequenzen gezeigt. Verglichen wurde die Amplitude der am Rand des Rohres reflektierten horizontal polarisierten Transversalwelle 4 des T(0,1) Modes in axialer Richtung mit der Amplitude der in axialer Richtung ausgesendeten vertikal polarisierten Transversalwellen 7 des L(0,2) Mode in Umfangsrichtung Richtung. Für 100 kHz ist das Amplitudenverhältnis beider Wellen 1, bei 200 kHz zeigt das betrachte Echo der T(0,1) Welle nur die halbe Amplitude der L(0,2) Mode, für das gewählte Geometrieverhältnis.

## Patentansprüche

1. Verfahren zur zerstörungsfreien Prüfung an über den Umfang von Bauteilen umlaufenden Wandungen, bei dem mit mindestens einem Ultraschallwandler (1), der an einer Oberfläche der Wandlung fixiert ist, horizontal polarisierte Transversalwellen (3) in lateraler Ausbreitungsrichtung und Kompressionswellen oder vertikal polarisierte Transversalwellen (6) in radialer Ausbreitungsrichtung emittiert
und
mit dem mindestens einen Ultraschall-Wandler (1) und/oder mindestens einem weiteren Ultraschall-Wandler, der in einem bekannten Abstand zum mindestens einen Ultraschall-Wandler (1) an der jeweiligen Wandung des Bauteils (2) angeordnet ist,
an Defekten reflektierte horizontal polarisierte Transversalwellen (4) und
Kompressionswellen oder vertikal polarisierte Transversalwellen (7) nach oder bei einem Umlauf um den Umfang der Wandung zur Bestimmung der jeweiligen Wanddicke detektiert werden.

2. Verfahren nach Anspruch 1, **dadurch gekennzeichnet, dass** die Amplitude und/oder die Laufzeit von an Defekten reflektierten reflektierte horizontal polarisierte Transversalwellen (4) und die Amplitude und/oder die Laufzeit von Kompressionswellen oder vertikal polarisierten Transversalwellen (7) nach oder bei einem Umlauf um den Umfang der Wandung zur Bestimmung der jeweiligen Wanddicke detektiert werden.

3. Verfahren nach einem der vorhergehenden Ansprüche, **dadurch gekennzeichnet, dass** horizontal polarisierte Transversalwellen (3) in lateraler Ausbreitungsrichtung und Kompressionswellen oder vertikal polarisierte Transversalwellen (6) in radialer Ausbreitungsrichtung mit einer Frequenz im Bereich 10kHz bis 1 MHz emittiert werden.

4. Verfahren nach einem der vorhergehenden Ansprüche, **dadurch gekennzeichnet, dass** mindestens ein Ultraschall-Wandler (1), der in einem elastisch verformbaren Material eingebettet oder einlaminiert ist, eingesetzt wird.

5. Verfahren nach einem der vorhergehenden Ansprüche, **dadurch gekennzeichnet, dass** der mindestens eine Ultraschallwandler (1) mittels einer über den Umfang der jeweiligen Wandung umlaufenden Manschette am Bauteil (2)befestigt wird.
